(19) Europäisches Patentamt / European Patent Office / Office européen des brevets

(11) **EP 3 395 601 A1**

# EUROPEAN PATENT APPLICATION
published in accordance with Art. 153(4) EPC

(43) Date of publication:
**31.10.2018 Bulletin 2018/44**

(21) Application number: **16878829.7**

(22) Date of filing: **21.12.2016**

(51) Int Cl.:
**B60K 35/00** (2006.01)    **G02B 27/01** (2006.01)

(86) International application number:
**PCT/JP2016/088236**

(87) International publication number:
**WO 2017/110942 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.12.2015 JP 2015252627**

(71) Applicant: **KYOCERA Corporation**
**Kyoto 612-8501 (JP)**

(72) Inventors:
• **KUSAFUKA Kaoru**
  **Kyoto-shi**
  **Kyoto 612-8501 (JP)**
• **HAYASHI Yusuke**
  **Kyoto-shi**
  **Kyoto 612-8501 (JP)**
• **KAWAJI Satoshi**
  **Kyoto-shi**
  **Kyoto 612-8501 (JP)**

(74) Representative: **Viering, Jentschura & Partner mbB**
**Patent- und Rechtsanwälte**
**Am Brauhaus 8**
**01099 Dresden (DE)**

(54)    **VEHICULAR HEAD-UP DISPLAY SYSTEM**

(57)    A vehicular head-up display system comprises a display panel, a semi-transmissive plate, a chromaticity acquisition unit, and a controller. The display panel has a display surface for displaying an image. The semi-transmissive plate is configured to reflect display light from the display surface and guide the light to a certain space. The chromaticity acquisition unit is configured to acquire the chromaticity of a background superimposed on a virtual image of the display surface, wherein the virtual image is to be visually recognized by an operator positioned in the certain space. The controller is configured to calculate the chromaticity of a composite display surface combining the display surface and the background, and control the chromaticity of the display surface such that a chromaticity difference between the chromaticity of the background and the chromaticity of the composite display surface is equal to or more than a certain value.

*FIG. 3*

EP 3 395 601 A1

**Description**

CROSS-REFERENCE TO RELATED APPLICATION

The present application claims priority to and the benefit of Japanese Patent Application No. 2015-252627 filed December 24, 2015, the entire contents of which are incorporated herein by reference.

TECHNICAL FIELD

The present disclosure relates to a vehicular head-up display system.

BACKGROUND

Vehicular head-up display (HUD) apparatuses are used to reflect light transmitted through a display panel of a projection unit to a semi-transmissive plate such as a windshield of a vehicle. The reflected light causes an operator of the vehicle to recognize a virtual image of a display surface of the display panel.

Japanese Unexamined Publication No. 2001-174774 discloses a vehicular HUD apparatus. The vehicular HUD apparatus switches between spectroscopic methods for high color display and for high luminance display. In the vehicular HUD apparatus, for high color display, three primary color filter is inserted into an optical path. On the other hand, for high luminance display, the filter is removed from the optical path.

SUMMARY

A vehicular head-up display system according to an embodiment of the present disclosure comprises a display panel, a semi-transmissive plate, a chromaticity acquisition unit, and a controller. The display panel has a display surface for displaying an image. The semi-transmissive plate is configured to reflect display light from the display surface and guide the light to a certain space. The chromaticity acquisition unit is configured to acquire chromaticity of a background superimposed on a virtual image of the display surface, wherein the virtual image is to be visually recognized by an operator positioned in the certain space. The controller is configured to calculate chromaticity of a composite display surface combining the display surface and the background. The controller is configured to control chromaticity of the display surface such that a chromaticity difference between the chromaticity of the background and the chromaticity of the composite display surface is equal to or more than a certain value.

BRIEF DESCRIPTION OF THE DRAWINGS

In the accompanying drawings:

FIG. 1 illustrates the schematic configuration of a vehicular head-up display apparatus according to an embodiment of the present disclosure;
FIG. 2 illustrates the schematic configuration of the display in FIG. 1;
FIG. 3 is a schematic view illustrating an example of the virtual image in FIG. 1;
FIG. 4 is a flowchart illustrating processing performed by the controller in FIG. 1;
FIG. 5 illustrates an example of color difference correction presence determination in the processing of FIG. 4; and
FIG. 6 illustrates an example of chromaticity change on a display surface in the processing of FIG. 4.

DETAILED DESCRIPTION

Embodiments according to the present disclosure will be described in detail with reference to the accompanying drawings.

A vehicular head-up display apparatus (HUD apparatus) 1 according to one of the disclosed embodiments includes a display 10, a controller 20, a projection optical system 30, a chromaticity acquisition unit 40, a luminance acquisition unit 50, an in-vehicle illuminance acquisition unit 60, and a vehicle speed acquisition unit 70.

The display 10 and the projection optical system 30 are stored in a housing 5. The HUD apparatus 1 can be called a vehicular head-up display system (HUD system) when including a configuration not stored in the housing 5. The housing 5 is accommodated in a dashboard or the like of a vehicle V. The HUD apparatus 1 is configured to emit display light X from a display surface of the display 10 to the outside via the projection optical system 30. The emitted display light X is reflected by a semi-transmissive plate Y such as a windshield or the like of the vehicle V. The reflected display light X is then guided to a certain space in which it is assumed that eyes of an operator M such as a driver of the vehicle V are located. By receiving the display light X, the operator M visually recognizes a virtual image Z at a certain position in front of the semi-transmissive plate Y. The virtual image Z is a surface illusive to the operator M as being in front of the vehicle. The operator M views the virtual image Z as overlapped with the scenery and the like in front of the vehicle V.

The display 10 is configured to emit the display light X which corresponds to an image requested to be visually recognized by the operator M. The display 10 includes a light source apparatus, and a transmissive display panel or a self-emissive display panel. When illumination light emitted from the light source apparatus passes through a transmissive display panel, the intensity of each wavelength of the illumination light is attenuated according to a displayed image. That is, the illumination light becomes the display light X corresponding to the displayed image by passing through the liquid crystal panel. On the other hand, a self-emissive display panel is configured to emit display light corresponding to an image to be displayed. Details of the display 10 will be described later.

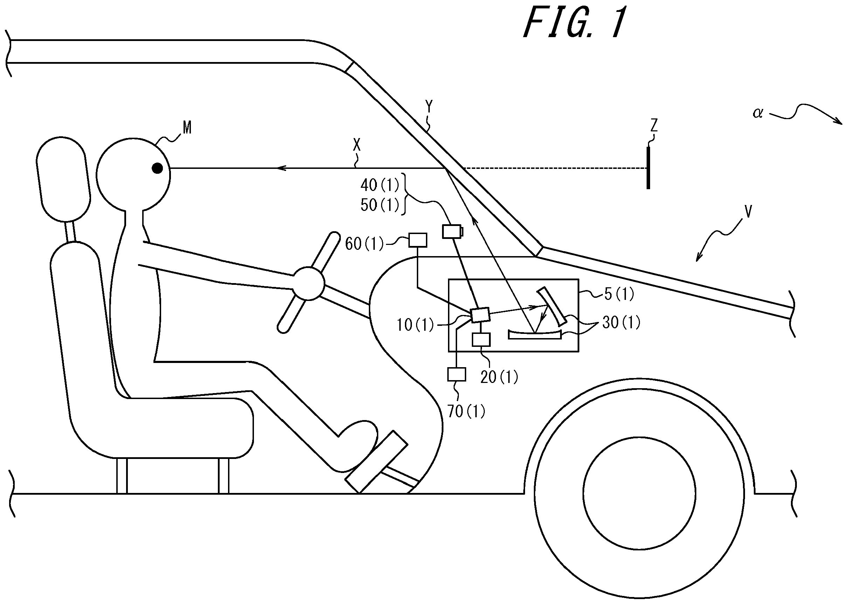

The controller 20 controls the display light X emitted from the display 10. The controller 20, for example, includes a micro computer. The micro computer may include a nonvolatile storage area, and a processor configured to execute a control program stored in the storage area. The controller 20 can control an image displayed on the display surface of the display panel of the display 10. The controller 20 controls the display light X by controlling at least one of the amount of the illumination light from the light source apparatus of the display 10 and the image displayed on the display surface of the display panel. The controller 20 controls the amount of the illumination light from the light source apparatus, for example, by controlling lighting time and the amount of supply power. The controller 20 changes the luminance of the display light by controlling the amount of the light from the light source apparatus. Further, the controller 20 controls the chromaticity and the luminance of the display light X by controlling the image displayed on the display surface of the display panel. The chromaticity and the luminance of the virtual image Z changes in accordance with the chromaticity and the luminance of the display light X. Thus, it can be said that the controller 20 can control the chromaticity and the luminance of the virtual image Z. In FIG. 1, the controller 20 is accommodated in the housing 5, however, it may be located outside the housing 5. The controller 20 may include a control unit of the vehicle V.

The projection optical system 30 is configured to reflect the display light X from the display 10 and guide the light to the semi-transmissive plate Y. The projection optical system 30 can enlarge the extent over which the display light X is projected. The projection optical system 30 has a mirror constituted by, for example, a concave mirror or the like. FIG. 1 illustrates an example in which the projection optical system 30 has two mirrors, however, the number of mirrors is not limited to two.

The semi-transmissive plate Y is configured to reflect a part of the incident light. That is, the semi-transmissive plate Y can transmit a part of the incident light. The semi-transmissive plate Y can be included in the vehicle V. Other than the windshield of the vehicle V, the semi-transmissive plate Y may be a combiner that reflects the display light X from the projection optical system 30, or the like. The semi-transmissive plate Y such as a combiner or the like can be included in the HUD apparatus 1. The semi-transmissive plate Y is configured to reflect a part of the display light Y irradiated from the projection optical system 30 towards a space in which it is assumed that the eyes of the operator M are present. The space in which it is assumed that the eyes of the operator M are present may be called an eye-box.

The virtual image Z is visually recognized by the operator M when the operator M receives the display light X reflected by the semi-transmissive plate Y. The virtual image Z is visually recognized by the operator M as overlapped with a background $\alpha$ such as the scenery outside the vehicle visible to the operator M through the semi-transmissive plate Y. The operator M is under the illusion that the image Z is a surface in front of the vehicle V. The operator M views the virtual image Z as overlapped with the scenery and the like in front of the vehicle V.

The chromaticity acquisition unit 40 is configured to acquire the chromaticity of the background $\alpha$ superimposed on the virtual image Z. The acquired chromaticity is then transmitted to the controller 20. The luminance acquisition unit 50 is configured to acquire the luminance of the background $\alpha$ superimposed on the virtual image Z. The acquired luminance is then transmitted to the controller 20.

The chromaticity acquisition unit 40 and the luminance acquisition unit 50 can be configured integrally as a single imaging apparatus. The chromaticity acquisition unit 40 and the luminance acquisition unit 50 can acquire the chromaticity and the luminance of the background $\alpha$ based on imaging information of the background $\alpha$.

The chromaticity acquisition unit 40, for example, may be configured as an input terminal that receives chromaticity input from an external imaging apparatus. The luminance acquisition unit 50, for example, may be configured as an input terminal that receives luminance input from an external imaging apparatus. The chromaticity acquisition unit 40 and the luminance acquisition unit 50 may be configured as one input terminal. The chromaticity acquisition unit 40 and the luminance acquisition unit 50, for example, may be configured as an input terminal that receives the input of video signals including the background $\alpha$ from an external imaging apparatus. Then, the chromaticity acquisition unit 40 and the luminance acquisition unit 50 may transmit the inputted video signals to the controller 20. From the received video signals, the controller 20 can acquire the chromaticity and the luminance.

The in-vehicle illuminance acquisition unit 60 is configured to acquire the interior illuminance of the vehicle V. The acquired illuminance is then transmitted to the controller 20. The in-vehicle illuminance acquisition unit 60 includes, for example, an illuminance sensor or the like.

The vehicle speed acquisition unit 70 is configured to acquire the travelling speed of the vehicle V from a speed sensor or the like provided in the vehicle V. The acquired travelling speed is then transmitted to the controller 20. The vehicle speed acquisition unit 70 may include, for example, an engine control unit (ECU) of the vehicle V. The vehicle speed acquisition unit 70, for example, may be configured as an input terminal that receives the input of video signals including the background $\alpha$ from an external vehicle speed sensor or the ECU.

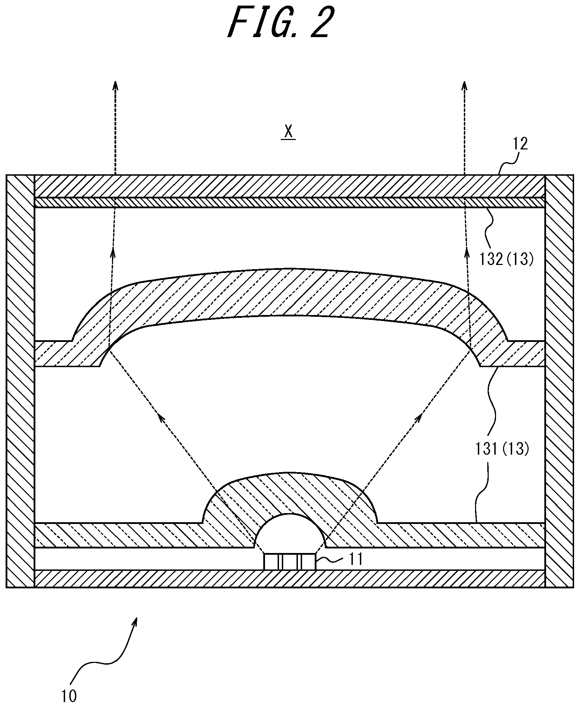

Next, the schematic configuration of the display 10 will be described with reference to FIG. 2. The display 10 includes a light source apparatus 11, a display panel 12, and an illumination optical system 13.

The light source apparatus 11 is a member that emits illumination light. The light source apparatus 11 may include, for example, one or a plurality of LEDs (Light Emitting Diode) which emit white light divergently. The illumination light emitted from the light source apparatus 11 passes through the illumination optical system 13 and irradiates the display panel 12.

When the light source apparatus 11 includes a plurality of LEDs, for example, as illustrated in FIG. 2, each LED may be located at a position on a surface parallel to the display panel 12 close to the intersection point of the surface and a perpendicular line from the center of the display panel 12, such that it can be regarded as a point light source.

The display panel 12 is a transmissive display panel. The display 12 includes a liquid crystal display panel and a MEMS shutter panel. The liquid crystal panel may include, for example, a polarizing filter, a glass substrate, a transparent electrode, an oriented film, a liquid crystal display element, a color filter, and the like. When the illumination light irradiated from the illumination optical system 13 enters the display panel 12, the transmitted light is emitted as the display light X. The display light X is light corresponding to an image displayed on the display surface of the display panel 12. When a color image is displayed on the display surface of the display panel 12, the display light X becomes light corresponding to the color image. When the image displayed on the display surface of the display panel 12 changes, the display light X changes accordingly. The image displayed on the display surface of the display panel 12 is controlled by the controller 20. The controller 20 can control the display light X by controlling the image displayed on the display surface of the display panel 12.

The illumination optical system 13 is located between the light source apparatus 11 and the display panel 12. The illumination optical system 13 is configured to guide the illumination light from the light source apparatus 11 to the display panel 12. The illumination optical system 13, for example, includes lenses 131 and a diffusion plate 132. The illumination optical system 13 is configured to guide the illumination light from the light source apparatus 11 to enter the display panel 12.

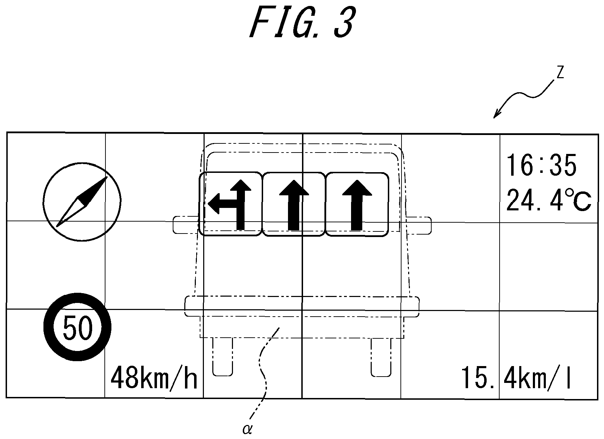

Next, an example of the virtual image Z caused by the HUD apparatus 1 will be described with reference to FIG. 3. Various kinds of information such as vehicle speed information, average fuel consumption information, and the like, are displayed on the display surface of the display panel 12 with preset chromaticity and luminance. Here, the chromaticity and the luminance of the information displayed on the display surface, for example, are controlled by the following. The controller 20 is configured to determine the luminance of illumination light to be emitted from the light source apparatus 11 and the chromaticity of information to be displayed by the display panel 12, based on the requested chromaticity and luminance of information to be displayed on the display surface of the display panel 12, and then store the correspondence information in advance. The controller 20 controls the light source apparatus 11 and the display panel 12 based on the correspondence information.

The virtual image Z is visually recognized by the operator M as overlapped with the background α visible to the operator M through the semi-transmissive plate Y. As illustrated in FIG. 3, the operator M visually recognizes the virtual image Z overlapped with the background α. When the background α and the virtual image Z are of the same color system, it is difficult for the information displayed on the virtual image Z to be distinguished from the background α. Therefore, in the present embodiment, the following processing is adopted to improve the visibility of the virtual image Z.

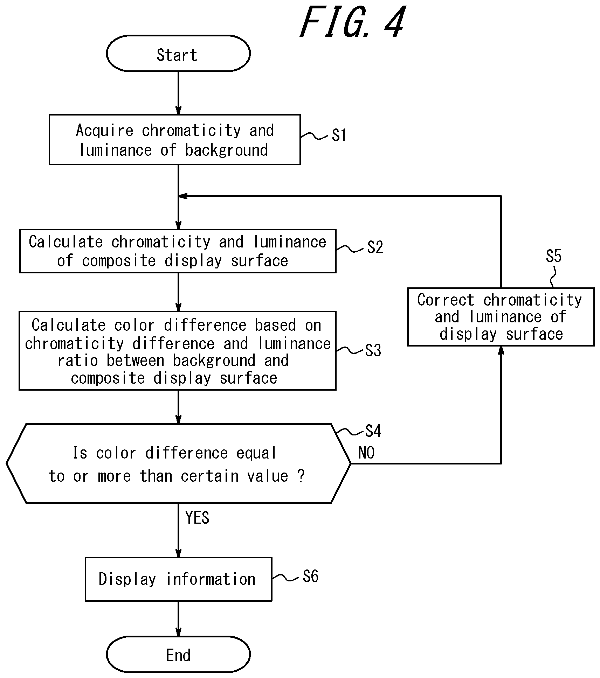

Next, the processing performed by the controller 20 will be described with reference to the flowchart illustrated in FIG. 4.

Initially, based on the imaging information, the controller 20 acquires the chromaticity and the luminance of the background α superimposed on the virtual image Z from the chromaticity acquisition unit 40 and the luminance acquisition unit 50 (Step S1). Here, the acquired chromaticity and luminance of the background α are expressed as $(Y_2, u', v')$ in the u'v'Y color system. The acquired chromaticity and luminance of the background α, for example, are then converted to $(Y_2, x_2, y_2)$ in the xyY color system in accordance with the following conversion formula.

$$x_2 = 9u'/(6u' - 16v' + 12),$$

$$y_2 = 4v'/(6u' - 16v' + 12).$$

Next, the controller 20 calculates the chromaticity and the luminance of a composite display surface combining the display surface and the background α (Step S2). Here, the chromaticity and the luminance of the display surface used in the calculation of the chromaticity and the luminance of the composite display surface are stored in advance as information expressed as $(Y_1, x_1, y_1)$ in the xyY color system in a manner readable by the controller 20. The chromaticity and the luminance of the composite display surface are information expressed as $(X_3, Y_3, Z_3)$ in the XYZ color system and as $(Y_3, x_3, y_3)$ in the xyY color system.

The values of the chromaticity and the luminance of the composite display surface calculated in Step S2 are expressed by the sum of the corresponding values of the chromaticity and the luminance of the display surface and the chromaticity and the luminance of the background α, for example, as follows.

$$X_3 = Y_1 \times x_1/y_1 + Y_2 \times x_2/y_2,$$

$$Y_3 = Y_1 + Y_2,$$

$$Z_3 = Y_1 \times (1-x_1-y_1)/y_1 + Y_2 \times (1-x_2-y_2)/y_2.$$

Accordingly, by substituting the values of $X_3$, $Y_3$ and $Z_3$ into formulas $x_3 = X_3/(X_3+Y_3+Z_3)$ and $y_3 = Y_3/(X_3+Y_3+Z_3)$, the values of the chromaticity and the luminance of the composite display surface can be expressed based on the chromaticity and the luminance of the display surface and the chromaticity and the luminance of the background $\alpha$.

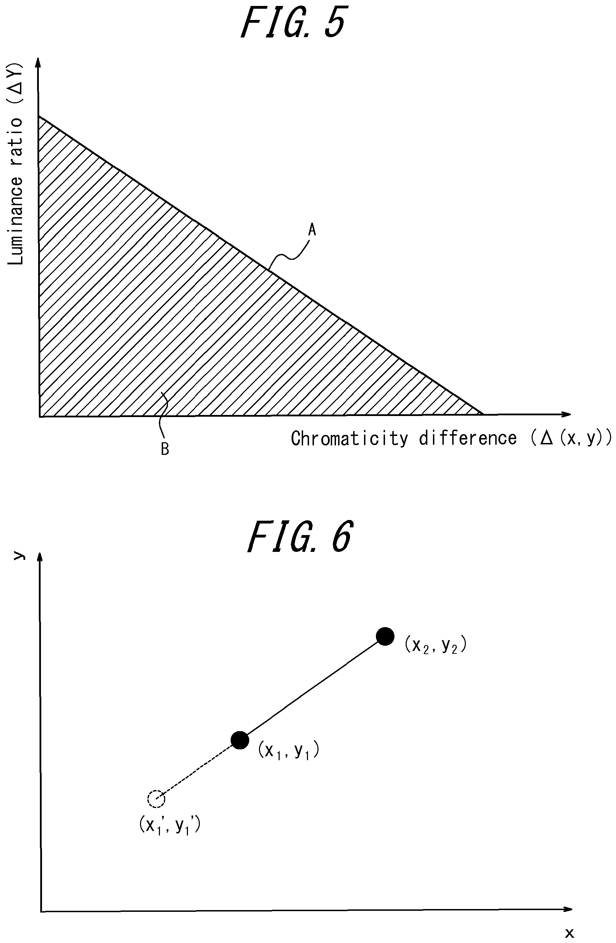

Next, the controller 20 calculates a color difference, from the chromaticity difference between the chromaticity of the background $\alpha$ and the chromaticity of the composite display surface, and the luminance ratio between the luminance of the background $\alpha$ and the luminance of the composite display surface (Step S3). More particularly, for example, as illustrated in FIG. 5, when the chromaticity difference $\Delta(x, y)$ is taken on the horizontal axis and the luminance ratio $\Delta Y$ is taken on the vertical axis, the coordinate value determined as $(\Delta(x, y), \Delta Y)$ can be defined as color difference. Here, the chromaticity difference $\Delta(x, y)$ between the composite display surface and the background $\alpha$ can be expressed as

$$\Delta(x, y) = \{(x_3-x_2)^2 + (y_3-y_2)^2\}^{1/2}.$$

Further, the luminance ratio $\Delta Y$ between the composite display surface and the background $\alpha$ can be expressed as

$$\Delta Y = (Y_1+Y_2)/Y_2.$$

Next, the controller 20 determines whether the calculated color difference is equal to or more than the certain value (Step S4). More particularly, for example, as illustrated in FIG. 5, the straight line defined by

$$\Delta Y = a \times \Delta(x, y) + b \quad (\text{where } a<0, \ b>0)$$

is a correction threshold line A. When the value of the color difference is equal to or more than the color difference defined by the correction threshold line A, that is, when $\Delta Y \geq a \times \Delta(x, y)+b$ is satisfied, it can be determined that the color difference is equal to or more than the certain value.

When the color difference is determined as less than the certain value (Step S4: NO), the controller 20 corrects the chromaticity and the luminance of the display surface (Step S5) and then returns to Step S2. More particularly, for example, as illustrated in FIG. 5, when the value of the color difference is less than the color difference defined by the correction threshold line A, that is, when $\Delta Y < a \times \Delta(x, y)+b$ is satisfied (when the value of the color difference is included in the correction target area B), it can be determined that the color difference is less than the certain value.

The correction of the chromaticity and the luminance of the display surface can be performed, for example, by the following procedure. The controller 20 first increases the setting value of the luminance of the display surface. Based on the increased setting value of the luminance of the display surface, the controller 20 re-executes the processing from Step S2 to Step S4. The controller 20 increases the setting value of the luminance of the display surface up to a luminance upper limit value until the color difference becomes equal to or more than the certain value. If the value of the color difference remains less than the certain value even if the setting value of the luminance of the display surface is increased to the luminance upper limit value, the controller 20 then changes the setting value of the chromaticity of the display surface. Based on the changed setting value of the chromaticity of the display surface, the controller 20 re-executes the processing from Step S2 to Step S4. The controller 20 changes the setting value of the chromaticity of the display surface until the value of the color difference becomes equal to or more than the certain value.

The change of the setting value of the chromaticity of the display surface can be performed, for example, by setting the setting value of the chromaticity of the display surface to the complementary color of the chromaticity of the background $\alpha$. More particularly, as illustrated in FIG. 6, on the straight line connecting the setting value of the chromaticity of the display surface $(x_1, y_1)$ and the chromaticity of the background $\alpha$ $(x_2, y_2)$ on the xy coordinate, the setting value of the chromaticity of the display surface may be moved to $(x_1', y_1')$ on the side opposite to the chromaticity of the background $\alpha$ $(x_2, y_2)$ with respect to $(x_1, y_1)$.

When the value of the color difference becomes equal to or more than the certain value (Step S4: YES), the controller 20 displays the virtual image Z based on the setting values of the chromaticity and the luminance (Step S6) and then terminates the processing.

By the above described processing, the HUD apparatus 1 can control the chromaticity and the luminance of the display surface such that the color difference between the display surface and the background $\alpha$ superimposed on the display surface becomes equal to or more than the certain value. Accordingly, the HUD apparatus 1 can ensure the visibility of the virtual image Z irrespective of the background $\alpha$.

Further, in the processing illustrated in FIG. 4, the controller 20 may divide the background $\alpha$ into areas (blocks) as illustrated in FIG. 3 which constitute the virtual image Z, via the chromaticity acquisition unit 40 and the luminance acquisition unit 50. The controller 20 may acquire the chromaticity and the luminance of each divided block. The controller 20 may further calculate the chromaticity and the luminance of the composite display surface for each block. The controller 20 may control the chromaticity and the luminance of each block of the display surface corresponding to the virtual image Z such that the color difference of each block is equal to or more than the certain value. In this way, the HUD apparatus 1 can make the color difference from the background α to be equal to or more than the certain value for each block constituting the display surface. Further, for the chromaticity and the luminance of each block, the average value, the maximum value or the median value of each value in each block can be used as a representative value.

In addition to the processing illustrated in FIG. 4, the controller 20 may be configured to increase the luminance of the display surface as the interior illuminance acquired by the in-vehicle illuminance acquisition unit 60 is higher. Accordingly, the HUD apparatus 1 can reduce the influence on the visibility of the virtual image Z due to the interior illuminance in addition to the background α.

Furthermore, the controller 20 may perform the processing illustrated in FIG. 4 at a higher frequency as the running speed of the vehicle V acquired by the vehicle speed acquisition unit 70 is greater. Accordingly, the HUD apparatus 1 can continuously ensure high visibility even when the background α changes more frequently as the running speed of the vehicle V increases.

The present invention has been described based on the drawings and the embodiment, however, it should be noted that those skilled in the art can easily make various changes and modifications based on the present disclosure. Thus, such changes and modifications are to be understood as included within the scope of this disclosure. For example, functions and the like included in various functional components, means, and steps may be reordered in any logically consistent way. Furthermore, functional components or steps may be combined into one or divided.

In the processing illustrated in FIG. 4, the controller 20 is configured to calculate the color difference from the chromaticity and the luminance of the background α and the chromaticity and the luminance of the display surface, and control the color difference such that it becomes equal to or more than the certain value. However, the present disclosure is not limited to this configuration. For example, the controller 20 may be configured to calculate a difference between the chromaticity of the background α and the chromaticity of the display surface (a chromaticity difference), and control the chromaticity of the display surface such that the chromaticity difference becomes equal to or more than a certain value. In this case, the luminance acquisition unit 50 is not necessarily required. As described, since the chromaticity difference between the chromaticity of the background α and the chromaticity of the display surface is kept equal to or more than the certain value, the HUD apparatus 1 can ensure the visibility of the virtual image Z irrespective of the background α.

Further, it has been described that the chromaticity acquisition unit 40 and the luminance acquisition unit 50 are configured as one imaging apparatus. However, the chromaticity acquisition unit 40 and the luminance acquisition unit 50 may be separate imaging apparatuses, or may be sensors or the like other than an imaging apparatus.

Moreover, in Step S4 of the processing illustrated in FIG. 4, the correction threshold line A used to determine whether the color difference is equal to or more than the certain value is indicated as a straight line as illustrated in FIG. 5. However, any other threshold line, such as a curve line, may be used.

REFERENCE SIGNS LIST

| | |
|---|---|
| 1 | HUD apparatus |
| 10 | Display |
| 20 | Controller |
| 40 | Chromaticity acquisition unit |
| 50 | Luminance acquisition unit |
| 60 | In-vehicle illuminance acquisition unit |
| 70 | Vehicle speed acquisition unit |
| A | Correction threshold line |
| B | Correction target area |
| M | Operator |
| V | Vehicle |
| X | Display light |
| Y | Semi-transmissive plate |
| Z | Virtual image |
| α | Background |

**Claims**

1. A vehicular head-up display system, comprising:

a display panel having a display surface for displaying an image;
a semi-transmissive plate configured to reflect display light from the display surface and guide the light to a certain space;
a chromaticity acquisition unit configured to acquire chromaticity of a background superimposed on a virtual image of the display surface, wherein the virtual image is to be visually recognized by an operator positioned in the certain space; and
a controller configured to calculate chromaticity of a composite display surface combining the display surface and the background, and control chromaticity of the display surface such that a chromaticity difference between the chromaticity of the background and the chromaticity of the composite display surface is equal to or more than a certain value.

2. The vehicular head-up display system according to claim 1, further comprising a luminance acquisition unit configured to acquire luminance of the background; wherein the controller is configured to calculate luminance of the composite display surface; and
control the chromaticity and the luminance of the display surface, based on a luminance ratio between the luminance of the background and the luminance of the composite display surface, and the chromaticity difference, such that a color difference is equal to or more than a certain value.

3. The vehicular head-up display system according to claim 2, wherein the chromaticity acquisition unit and the luminance acquisition unit are configured as one imaging apparatus.

4. The vehicular head-up display system according to claims 2 or 3, further comprising an in-vehicle illuminance acquisition unit for acquiring interior illuminance of a vehicle; wherein the controller is configured to increase the luminance of the display surface as the illuminance is higher.

5. The vehicular head-up display system according to any one of claims 1 to 4, wherein
the chromaticity acquisition unit is configured to divide the background and acquire chromaticity of each block obtained by the division; and
the controller is configured to calculate the chromaticity of the composite display surface for each of the blocks, and control chromaticity of each of the blocks of the display surface such that the chromaticity difference for each of the blocks is equal to or more than a certain value.

6. The vehicular head-up display system according to any one of claims 1 to 5, further comprising a vehicle speed acquisition unit for acquiring running speed of a vehicle; wherein the controller is configured to perform processing at a higher frequency as the running speed of the vehicle is greater.

*FIG. 1*

# FIG. 2

## FIG. 3

16:35
24.4°C

50

48km/h

15.4km/l

# FIG. 4

```
         ┌──────────┐
         │  Start   │
         └────┬─────┘
              │
              ▼
    ┌─────────────────────┐
    │ Acquire chromaticity and │  S1
    │ luminance of background  │
    └──────────┬──────────┘
              │
              ▼
    ┌─────────────────────┐
    │ Calculate chromaticity and luminance │  S2
    │   of composite display surface       │
    └──────────┬──────────┘
              │
              ▼
    ┌─────────────────────┐          ┌─────────────────────┐
    │ Calculate color difference based on │ S3     │  S5  Correct chromaticity │
    │ chromaticity difference and luminance │      │  and luminance of        │
    │ ratio between background and          │      │  display surface         │
    │ composite display surface             │      └─────────────────────┘
    └──────────┬──────────┘
              │
              ▼
    ╱─────────────────────╲  S4
    │ Is color difference equal │   NO
    │ to or more than certain value ? │────────────►
    ╲─────────────────────╱
              │ YES
              ▼
    ┌─────────────────────┐
    │ Display information  │  S6
    └──────────┬──────────┘
              │
              ▼
         ┌──────────┐
         │   End    │
         └──────────┘
```

# FIG. 5

# FIG. 6

## INTERNATIONAL SEARCH REPORT

| International application No. |
| --- |
| PCT/JP2016/088236 |

A. CLASSIFICATION OF SUBJECT MATTER
*B60K35/00(2006.01)i, G02B27/01(2006.01)i*

According to International Patent Classification (IPC) or to both national classification and IPC

B. FIELDS SEARCHED

Minimum documentation searched (classification system followed by classification symbols)
B60K35/00, G02B27/01

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2006-350617 A (Denso Corp.),<br>28 December 2006 (28.12.2006),<br>paragraphs [0004], [0012] to [0032]<br>& US 2007/0013495 A1<br>paragraphs [0009], [0015] to [0044]<br>& DE 102006027679 A1　& CN 1880919 A | 1<br>2-6 |
| Y | JP 2007-282022 A (Toyota Motor Corp.),<br>25 October 2007 (25.10.2007),<br>paragraphs [0011], [0022] to [0045]<br>(Family: none) | 2-6 |
| Y | JP 2015-161632 A (Fujitsu Ten Ltd.),<br>07 September 2015 (07.09.2015),<br>claim 4; paragraph [0047]<br>& US 2015/0211878 A1<br>claim 4; paragraphs [0039] to [0128] | 4-6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>03 February 2017 (03.02.17) | Date of mailing of the international search report<br>14 February 2017 (14.02.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

13

**INTERNATIONAL SEARCH REPORT**

| International application No. |
|---|
| PCT/JP2016/088236 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-174667 A  (Nippon Seiki Co., Ltd.),<br>05 September 2013 (05.09.2013),<br>paragraphs [0012] to [0032]<br>(Family: none) | 5-6 |
| Y | JP 2015-194709 A  (Panasonic Intellectual<br>Property Management Co., Ltd.),<br>05 November 2015 (05.11.2015),<br>paragraph [0027]<br>& US 2016/0173867 A1<br>paragraph [0027]<br>& WO 2015/146042 A1 | 6 |
| A | JP 4475595 B2  (Pioneer Corp.),<br>09 June 2010 (09.06.2010),<br>paragraphs [0017] to [0021]<br>(Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015252627 A
- JP 2001174774 A